Europäisches Patentamt

European Patent Office

Office européen des brevets

(19)

(11) Veröffentlichungsnummer : **0 362 719 B1**

(12)

# EUROPÄISCHE PATENTSCHRIFT

(45) Veröffentlichungstag der Patentschrift :
**19.11.92 Patentblatt 92/47**

(51) Int. Cl.⁵ : **B29C 65/10, F24H 3/04, B23K 3/04, B23K 3/047**

(21) Anmeldenummer : **89118122.4**

(22) Anmeldetag : **29.09.89**

(54) **Heissluft-Handschweissgerät.**

(30) Priorität : **04.10.88 DE 3833677**

(43) Veröffentlichungstag der Anmeldung :
**11.04.90 Patentblatt 90/15**

(45) Bekanntmachung des Hinweises auf die
Patenterteilung :
**19.11.92 Patentblatt 92/47**

(84) Benannte Vertragsstaaten :
**AT CH FR GB IT LI SE**

(56) Entgegenhaltungen :
**WO-A-84/03552**

(73) Patentinhaber : **ZINSER SCHWEISSTECHNIK
GmbH & Co.
W-7333 Ebersbach/Fils (DE)**

(72) Erfinder : **Goll, Günther
Wellinger Strasse 14
W-7311 Hochdorf (DE)**
Erfinder : **Vater, Peter
Maierhofstrasse 61
W-7348 Gruibingen (DE)**
Erfinder : **Keusch, Siegfried
Mozartstrasse 41
W-7301 Plochingen (DE)**
Erfinder : **Kratz, Günter
Im Zickzack 7
W-7311 Hochdorf (DE)**

(74) Vertreter : **Patentanwälte Phys. Bartels
Dipl.-Ing. Fink Dr.-Ing. Held
Lange Strasse 51
W-7000 Stuttgart 1 (DE)**

EP 0 362 719 B1

**Beschreibung**

Die Erfindung betrifft ein Heißluft-Handschweißgerät mit einem Kunststoffgehäuse, das einen stabförmigen, mit Lufteinlaßöffnungen versehenen Griffteil bildet, in dem ein Kommutatormotor festgelegt ist für den Antrieb eines Gebläserades, das von einem sich an den Griffteil anschließenden, im Durchmesser jedoch größeren Abschnitt des Gehäuses umgeben ist, an den sich auf der dem Griffteil abgekehrten Seite ein Endabschnitt anschließt, der eine Verbindungseinrichtung für eine Heizpatrone und ein diese umgebendes Schutz- und Verbindungsrohr aufweist.

Da der Außendruchmesser des Griffteils im Hinblick auf eine gute Handhabbarkeit des Gerätes einen bestimmten Wert nicht überschreiten darf und bei den bekannten Geräten der eingangs genannten Art der Kommutator des im Griffteil untergebrachten Motors auf der dem freien Ende des Griffteils zugekehrten Seite des Rotors angeordnet ist, ist der Raum für die Unterbringung der mit dem Kommutator zusammenwirkenden Kohlebürsten gering. Bei den bekannten Geräten ist deshalb die Kohlebürsten-Standzeit relativ gering. Nachteilig ist ferner ein relativ großer Aufwand für die Montage des Kommutatormotors und der mit ihm verbundenen Teile im Griffteil des Gehäuses. Ist eine Luftmengensteuerung vorhanden, so erfolgt diese durch eine Veränderung der Öffnung der im Griffteil vorgesehenen Lufteinlaßöffnungen. Es kann deshalb zu Übertemperaturen des Motors und vor allem auch der Steuerelektronik für die Heizpatrone kommen, welche zwischen dem Kommutatormotor und dem freien Griffende in dem hier eintretenden Luftstrom angeordnet ist. Weitere Nachteile der bekannten Geräte sind darin zu sehen, daß entweder nur aufsteckbare oder nur aufschraubbare Düsen verwendet werden können und daß die Hand der Bedienungsperson gefährdet ist, mit dem im Betrieb eine sehr hohe Temperatur aufweisenden Schutz- und Verbindungsrohr in Berührung zu kommen. Vor allem besteht diese Gefahr, wenn das die Düse tragende Ende des Gerätes gegen die Schweißstelle gedrückt werden muß.

Der Erfindung liegt die Aufgabe zugrunde, ein Heißluft-Handschweißgerät zu schaffen, das von wenigstens einem dieser Mängel der bekannten Geräte frei ist.

Diese Aufgabe löst ein Heißluft-Handschweißgerät, das die Merkmale des Anspruches 1 aufweist.

Durch die Anordnung des Gebläserades neben dem Kommutator kann man den Motor so im Gehäuse anordnen, daß der Kommutator und der zugehörige Bürstenapparat in dem das Gebläserad umgebenden Abschnitt des Gehäuses liegen. Da dieser Abschnitt einen wesentlich größeren Durchmesser als der den Griffteil bildende Abschnitt haben kann und- in der Praxis auch hat, steht in radialer Richtung für den Bürstenapparat soviel Platz zur Verfügung, daß Bürsten verwendet werden können, welche ein Vielfaches der Standzeit bei den bekannten Geräten haben. Der Raum reicht sogar dafür aus, Abschaltbürsten unterzubringen, welche zu einer Abschaltung des Gerätes führen, sofern die Bürstenlänge den minimalen Wert erreicht hat, der nicht unterschritten werden darf.

Bei einer bevorzugten Ausführungsform ist der Griffteil zweischalig ausgebildet. Dies führt zu einer kürzeren Montagezeit. Zu einer Verkürzung der Montagezeit trägt auch eine Ausbildung der Halbschalen gemäß Anspruch 3 bei, weil hier die Notwendigkeit entfällt, den Motor und die übrigen im Griffteil unterzubringenden Teile mittels Schrauben mit dem Griffteil zu verbinden.

Dadurch, daß der Bürstenapparat nicht mehr im Griffteil untergebracht werden muß, ist es möglich, gemäß Anspruch 4 zwischen der Außenmantelfläche des Stators des Kommutatormotors und der Innenmantelfläche des Gehäuses einen so großen Zwischenraum vorzusehen, daß der weitaus größte Teil der vom Gebläserad angesaugten Luft durch diesen Zwischenraum strömt. Dies hat den Vorteil, daß der Motor und insbesondere auch sein Kommutator weitgehend gegen Schäden durch Partikel geschützt sind, welche sich in der angesaugten Luft befinden.

Bei einer bevorzugten Ausführungsform des erfindungsgemäßen Gerätes ist ferner gemäß Anspruch 5 in dem das Gebläse umgebenden Teil des Gehäuses auf der Druckseite des Gebläserades eine Luftaustrittsöffnung vorgesehen, die mehr oder weniger weit geöffnet, aber nicht vollständig geschlossen werden kann. Eine derartige Steuerung der den Heizkörper durchströmenden Luftmenge hat wesentliche Vorteile gegenüber der bekannten Steuerung durch eine Veränderung der Größe der Lufteintrittsöffnungen. Es ist nämlich sichergestellt, daß der Motor und insbesondere auch die Elektronik stets die Kühlung durch einen ausreichend großen Luftstrom erfahren. Dadurch, daß die Luftaustrittsöffnung nicht vollständig geschlossen werden kann, wird außerdem sichergestellt, daß bei einem Verschluß der Düse noch genügend Luft zur Kühlung des Motors und der Elektronik angesaugt wird.

Um sicherzustellen, daß die Bedienungsperson auch dann mit der einen Hand nicht das Schutz- und Verbindungsrohr berührt, wenn sie mit dieser Hand die Düse gegen die Schweißstelle drücken muß, schließt sich vorzugsweise gemäß Anspruch 7 an den Endabschnitt des Gehäuses ein Schutzkörper an, der das Schutz- und Verbindungsrohr auf einem Teil von dessen Länge im Abstand umgibt. Die Bedienungsperson kann dann diejenige Hand, welche die Düse an die Schweißstelle andrücken muß, auf diesem Schutzkörper abstützen. Zweckmäßigerweise ist dieser Schutzkörper gemäß Anspruch 8 einstückig mit einem Überwurfring ausgebildet, mittels deren das Schutz- und Verbindungsrohr lösbar mit dem Gehäuse verbunden wird.

Um wahlweise sowohl die üblichen Aufsteckdüsen als auch die bekannten Schraubdüsen verwenden zu können, sind das Schutz und Verbindungsrohr sowie ein Düsenanschlußkörper gemäß Anspruch 9 ausgebildet.

Im folgenden ist die Erfindung anhand eines in der Zeichnung dargestellen Ausführungsbeispiels im einzelnen erläutert. Es zeigen

Fig. 1 eine Seitenansicht des Ausführungsbeispiels,

Fig. 2 eine Draufsicht auf den Endabschnitt des Griffteils des Ausführungsbeispiels,

Fig. 3 einen Längsschnitt des Ausführungsbeispiels,

Fig. 4 einen im Maßstab gegenüber Fig. 3 größer dargestellten, unvollständigen Längsschnitt in einer um 90° gegenüber dem Schnitt gemäß Fig. 3 gedrehten Schnittebene.

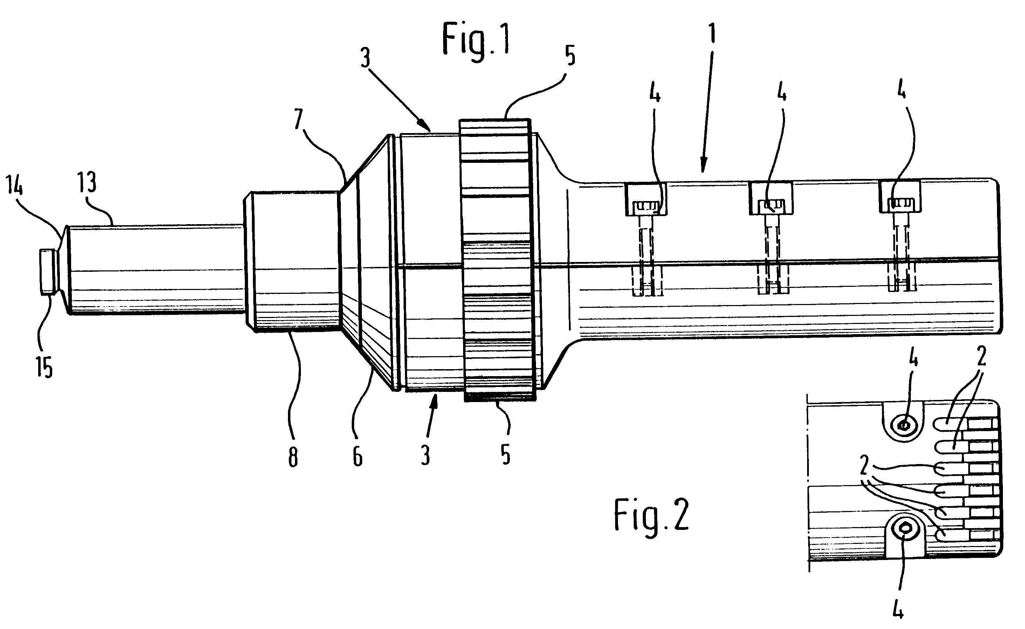

Ein Heißluft-Handschweißgerät weist ein aus Kunststoff bestehendes Gehäuse auf, das, wie Fig. 1 zeigt, einen Griffteil 1 in Form eines zylindrischen Stabes bildet. Am freien Ende des Griffteils 1 ist, wie Fig. 2 zeigt, das Gehäuse mit Lufteinlaßöffnungen 2 versehen. An das andere Ende des Griffteils 1 schließt sich ein ebenfalls zylindrischer, im Durchmesser jedoch wesentlich größerer Abschnitt 3 des Gehäuses an. Sowohl dieser Abschnitt 3 als auch der Griffteil 1 werden durch zwei Halbschalen gebildet, die im Bereich des Griffteiles 1 und des Abschnittes 3 mittels Schrauben 4 lösbar miteinander verbunden sind. Den Abschnitt 3 umgibt auf einem Teil seiner Länge ein Gummiring 5 als Geräte-Auflagerung. An die dem Griffteil 1 abgekehrte Seite des Gehäuses schließt sich ein Endabschnitt 6 an, zwischen dem und dem Abschnitt 3 eine formschlüssige Verbindung vorhanden ist. Wie Fig. 1 zeigt, verjüngt sich der Endabschnitt 6 konisch zu seinem dem Abschnitt 3 abgekehrten Ende hin, wo ein Gewinde für den Eingriff einer Überwurfmutter 7 vorgesehen ist, an den sich ein gleichachsig zu ihm und dem Gehäuse liegender, rohrförmiger Schutzkörper 8 anschließt, der einstückig mit der ebenfalls aus Kunststoff bestehenden Überwurfmutter 7 ausgebildet ist. Statt der Schraubverbindung könnte aber auch beispielsweise eine Bajonettverbindung vorgesehen sein.

Der Endabschnitt 6 des Gehäuses enthält eine Steckbuchse 9 zur Aufnahme der Steckerstifte 10 einer zylindrischen, gleichachsig zum Gehäuse angeordneten Heizpatrone 11, welche in nennenswertem Maße über das freie Ende des Schutzkörpers 8 übersteht. Auf den Heizkörper 11 ist eine Isolierhülse 12 aus wärmeisolierendem Material aufgeschoben, die etwas über das freie Ende der Heizpatrone übersteht. Diese Isolierhülse wird von einem metallischen Schutz- und Verbindungsrohr 13 umgeben, das an seinem an den Endabschnitt 6 des Gehäuses anschließenden Ende mit einem Flansch versehen ist, welcher zwischen dem Endabschnitt 6 und der Überwurfmutter 7 lösbar eingeklemmt ist.

Der Außendurchmesser des Schutz- und Verbindungsrohres 13 ist so gewählt, daß er dem Sitzdurchmesser der bekannten Aufsteckdüsen entspricht. Diese können deshalb auswechselbar auf den freien Endabschnitt des Schutz- und Verbindungsrohres 13 aufgesteckt werden. Am freien Ende des Schutz- und Verbindungsrohres 13 ist ein Düsenanschlußkörper 14 vorgesehen, dessen im Durchmesser reduzierter Endabschnitt mit einem Außengewinde 15 versehen ist, auf das die bekannten Schraubdüsen aufgeschraubt werden können.

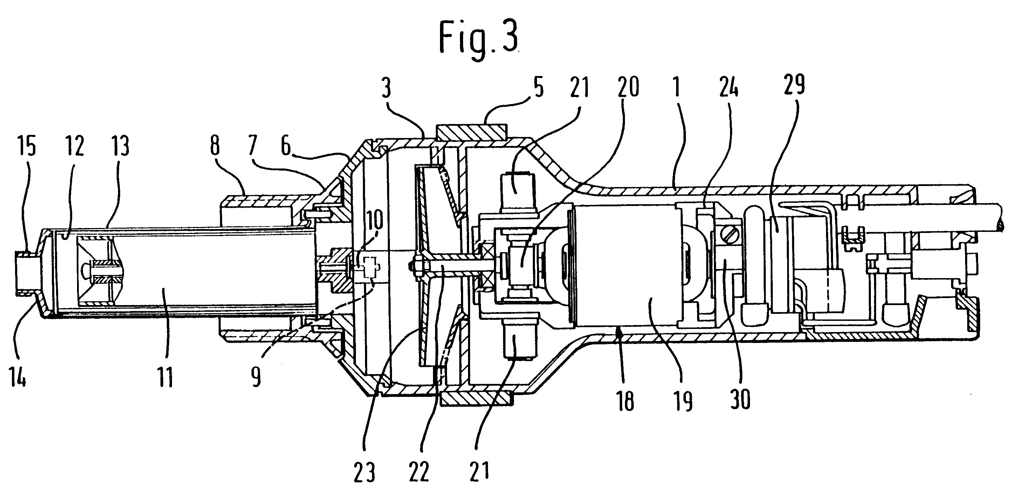

Im Griffteil 1 ist ein Kommutatormotor 16 gleichachsig zum Griffteil 1 durch eine Klemmwirkung der beiden Halbschalen festgelegt, und zwar, wie Fig. 3 zeigt, derart, daß sein Kommutator 20 und die im Lagerschild festgelegten Bürsterhalter 21 im Abschnitt 3 des Gehäuses liegen. Die diametral und radial angeordneten Bürstenhalter 21 können deshalb eine so große Länge haben, daß sie Kohlebrüsten mit einer Standzeit aufnehmen können, die eine hohe Standzeit der Kohlebürsten ergeben.

Die über den Kommutator 20 hinaus verlängerte Motorwelle 22 trägt ein ebenfalls im Abschnitt 3 des Gehäuses angeordnetes Gebläserad 23, das die angesaugte Luft durch die Heizpatrone 11 hindurchdrückt, so daß sie erhitzt durch den Düsenanschlußkörper 14 austritt.

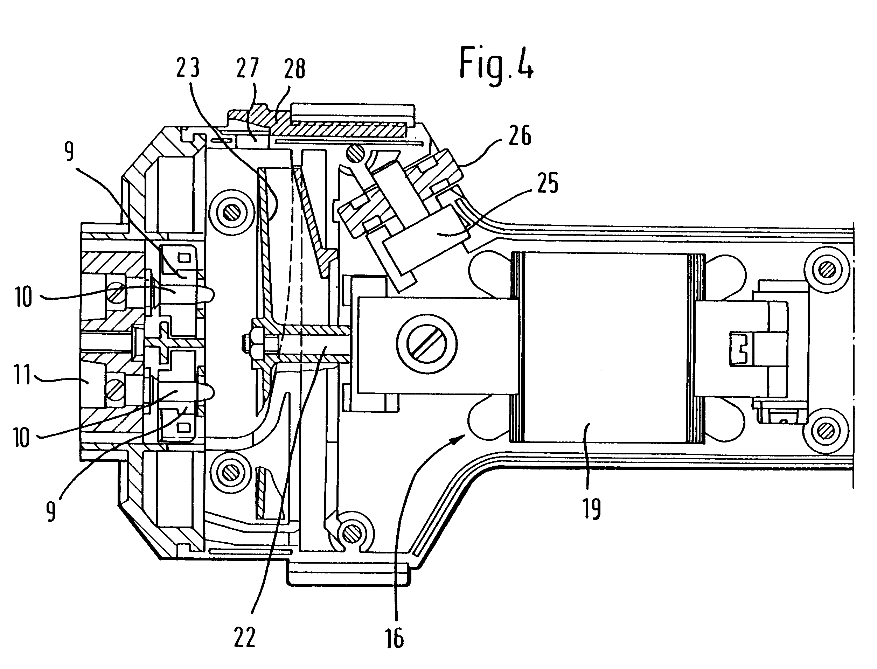

Dasjenige Lagerschild 24 des Kommutatormotors 18, das auf der dem Kommutator 20 abgekehrten Seite mit dem Stator 19 in gut wärmeleitender Verbindung steht, bildet den Kühlkörper einer Steuerschaltung 29, welche einen Triac 30 zur Steuerung des Heizstromes für die Heizpatrone 11 enthält. Der zugehörige, durch ein Potentiometer 25 gebildete Steuerwiderstand ist, wie Fig. 4 zeigt, im Bereich des Übergangs vom Griffteil 1 zum Abschnitt 3 des Gehäuses angeordnet, das hier eine Öffnung hat, die den Zugriff zu einem Stellrad 26 freigibt, das fest auf der Welle des Potentiometers 25 angeordnet und gut mit einem Finger der den Griffteil 21 umfassenden Hand betätigt werden kann.

Der Zwischenraum zwischen der Außenmantelfläche des Stators 19 und der Innenmantelfläche des Griffteiles 1 ist, wie die Fig. 3 und 4 zeigen, so groß gewählt, daß zumindest der größte Teil der vom Gebläserad 23 durch die Lufteinlaßöffnungen 2 angesaugten Luft über die Steuerschaltung 29, den Kühlkörper und die Außenmantelfläche des Stators 19 strömt, wodurch erreicht wird, daß mit der Luft mitgeführte Partikel nicht voll über den Kommutator 20 strömen. Hierdurch wird eine Erhöhung des Bürstenabriebes vermieden. Für die Steuerung der die Heizpatrone 11 durchströmenden Luftmenge ist im Abschnitt 3 des Gehäuses in demjenigen Bereich, in dem der vom Gebläserad 23 erzeugte Überdruck herrscht, eine Luftauslaßöffnung 27 vorgesehen, die mittels eines zwischen dem Gehäuse und dem Gummiring 5 in axialer Richtung verschiebbar angeordneten Schiebers 28 freigegeben und stufenlos bis auf einen Mindestquerschnitt verschlossen werden kann. Dieser Mindestquerschnitt ist so gewählt, daß dann, wenn keine Luft durch die Düse oder den Düsenanschlußkörper 14 austreten kann, immer noch eine für die Kühlung des Kommutatormotors 18 und der Steuerschaltung 24 erforderliche Luftmenge vom Gebläserad 23 durch den Griffteil 1 hindurchgesaugt wird.

**Patentansprüche**

1.  Heißluft-Handschweißgerät mit einem Kunststoffgehäuse, das einen stabförmigen, mit Lufteinlaßöffnungen versehenen Griffteil bildet, in dem ein Kommutatormotor festgelegt ist für den Antrieb eines Gebläserades, das von einem sich an den Griffteil anschließenden, im Durchmesser jedoch größeren Abschnitts des Gehäuses umgeben ist, an den sich auf der dem Griffteil abgekehrten Seite ein Endabschnitt anschließt, der eine Verbindungseinrichtung für eine Heizpatrone und ein diese umgebendes Schutz- und Verbindungsrohr aufweist, dadurch gekennzeichnet, daß das Gebläserad (23) neben dem Kommutator (20) des Kommutatormotors (18) angeordnet ist und der Kommutator (20) sowie die ihn kontaktierenden Kohlebürsten mit den zugehörigen Bürstenhaltern (21) in dem das Gebläserad (23) umgebenden Abschnitt (3) des Gehäuses angeordnet sind.

2.  Gerät nach Anspruch 1, dadurch gekennzeichnet, daß der den Griffteil (1) bildende Abschnitt des Gehäuses aus zwei Halbschalen besteht.

3.  Gerät nach Anspruch 2, dadurch gekennzeichnet, daß die beiden Halbschalen als eine den Kommutatormotor (18) im Gehäuse festlegende Klemmvorrichtung ausgebildet sind.

4.  Gerät nach einem der Ansprüche 1 bis 3, dadurch gekennzeichnet, daß zwischen der Außenmantelfläche des Stators (19) des Kommutatormotors (18) und der Innenmantelfläche des Gehäuses ein sich über die gesamte Motorlänge erstreckender Zwischenraum vorhanden ist, dessen Querschnittsgröße so gewählt ist, daß zumindest ein Großteil der vom Gebläserad (23) angesaugten Luft durch diesen Zwischenraum zum Gebläserad (23) strömt.

5.  Gerät nach einem der Ansprüche 1 bis 4, dadurch gekennzeichnet, daß in dem das Gebläserad (23) umgebenden Teil (3) des Gehäuses auf der Druckseite des Gebläserades (23) wenigstens eine Luftaustrittsöffnung (27) vorgesehen ist und dieser ein manuell betätigbares Verschlußteil (28) zugeordnet ist, das zwischen den Stellungen maximaler und minimaler Freigabe dieser Öffnung verstellbar ist, wobei in der Stellung minimaler Freigabe die Öffnung nur teilweise verschlossen ist.

6.  Gerät nach Anspruch 5, dadurch gekennzeichnet, daß das Verschlußteil als Schieber (28) ausgebildet ist.

7.  Gerät nach einem der Ansprüche 1 bis 6, dadurch gekennzeichnet, daß sich an den Endabschnitt (6) des Gehäuses ein Schutzkörper (8) anschließt, der das Schutz- und Verbindungsrohr (13) auf einem Teil von dessen Länge im Abstand umgibt.

8.  Gerät nach Anspruch 7, dadurch gekennzeichnet, daß der Schutzkörper (8) aus Kunststoff besteht und einstückig mit einem Überwurfring (7) ausgebildet ist.

9.  Gerät nach einem der Ansprüche 1 bis 8, dadurch gekennzeichnet, daß zusätzlich zu einem durch die Außenmantelfläche des Schutz- und Verbindungsrohres (13) gebildeten Sitz für auswechselbare Düsen am freien Ende des Schutz- und Verbindungsrohres (13) ein Düsenanschlußkörper (14) mit einem Gewindeabschnitt vorgesehen ist, auf den auswechselbare Düsen aufschraubbar sind.

**Claims**

1.  Hot-air manual welding device with a synthetic material housing, which forms a rod-shaped handle provided with air inlets, in which a commutator motor is fixed for driving a fan wheel, which is surrounded by a section of the housing adjoining the handle, but of larger diameter, adjoining which, on the side remote from the handle, is an end section, which comprises a connecting device for a heating cartridge and a protecting and connecting tube surrounding the latter, characterised in that the fan wheel (23) is located beside the commutator (20) of the commutator motor (18) and the commutator (20) as well as the carbon brushes contacting the latter with the associated brush holders (21) are located in the section (3) of the housing surrounding the fan wheel (23).

2.  Device according to Claim 1, characterised in that the section of the housing forming the handle (1) consists of two half-shells.

3.  Device according to Claim 2, characterised in that the two half-shells are constructed as a clamping device fixing the commutator motor (18) in the housing.

4. Device according to one of Claims 1 to 3, characterised in that a gap extending over the entire length of the motor is provided between the outer surface of the stator (19) of the commutator motor (18) and the inner surface of the housing, the cross-sectional size of which gap is chosen so that at least a majority of the air sucked in by the fan wheel (23) flows through this gap to the fan wheel (23).

5. Device according to one of Claims 1 to 4, characterised in that at least one air outlet (27) is provided in the part (3) of the housing surrounding the fan wheel (23), on the pressure side of the fan wheel (23) and associated with this air outlet is a manually actuated closing part (28), which can be adjusted between the positions of maximum and minimum opening of this outlet, in the position of minimum opening, the outlet being only partly closed.

6. Device according to Claim 5, characterised in that the closure part is constructed as a slide (28).

7. Device according to one of Claims 1 to 6, characterised in that adjoining the end section (6) of the housing is a protection member (8), which surrounds the protecting and connecting tube (13) over part of its length, at a distance.

8. Device according to Claim 7, characterised in that the protection member (8) consists of synthetic material and is constructed in one piece with a screw collar ring (7).

9. Device according to one of Claims 1 to 8, characterised in that in addition to a seat for exchangeable nozzles formed by the outer surface of the protecting and connecting tube (13), a nozzle connection member (14) with a threaded section is provided at the free end of the protecting and connecting tube (13), onto which threaded section exchangeable nozzles can be screwed.

**Revendications**

1. Appareil à air chaud pour le soudage à la main qui comprend une poignée cylindrique percée d'ouvertures d'entrée d'air dans laquelle est logé un moteur à collecteur destiné à entraîner un rotor de ventilateur qui est entouré par une partie de ladite enveloppe ayant un plus grand diamètre, faisant suite à la partie de celle-ci faisant fonction de poignée, à laquelle fait suite, du côté opposé à la poignée, une partie d'extrémité comportant un dispositif pour connecter une cartouche de chauffage et un tube de liaison et de protection entourant cette dernière, caractérisé en ce que le rotor (23) du ventilateur est monté à côté du collecteur (20) du moteur à collecteur (18) et en ce que le collecteur (20), ainsi que les charbons s'appliquant sur ce dernier et les porte-balais correspondants (21) sont montés dans la section ou la partie (3) de l'enveloppe entourant le rotor de ventilateur (23).

2. Appareil selon la revendication 1, caractérisé en ce que la partie de l'enveloppe formant la poignée (1) se compose de deux coquilles.

3. Appareil selon la revendication 2, caractérisé en ce que les deux coquilles forment un dispositif de serrage fixant le moteur à collecteur (18) dans l'enveloppe.

4. Appareil selon l'une quelconque des revendications 1 à 3, caractérisé en ce qu'entre la surface extérieure du stator (19) du moteur à collecteur (18) et la surface intérieure de l'enveloppe s'étend, sur toute la longueur du moteur, un intervalle dont la section est calculée pour que, une grande partie, au moins, de l'air aspiré par le rotor (23) du ventilateur traverse ledit intervalle pour se diriger vers le rotor du ventilateur (23).

5. Appareil selon l'une quelconque des revendications 1 à 4, caractérisé en ce que l'on aprévu dans la partie (3) de l'enveloppe entourant le rotor de ventilateur (23), du côté de la pression de ce dernier, un orifice d'évacuation d'air (27) qui comporte un élément de fermeture manuel (28) qui peut être déplacé entre une position d'ouverture maximale et d'ouverture minimale dudit orifice, ledit orifice n'étant fermé qu'en partie dans ladite position minimale.

6. Appareil selon la revendication 5, caractérisé en ce que l'élément de fermeture présente la forme d'un curseur (28).

7. Appareil selon l'une quelconque des revendications 1 à 6, caractérisé en ce que, à la partie d'extrémité (6) de l'enveloppe se raccorde un élément de protection (8) qui entoure, à distance, le tube de liaison et de protection ( 13 ) sur une partie de sa longueur.

8. Appareil selon la revendication 7, caractérisé en ce que l'élément de protection (8) est en matière plastique et est d'une pièce avec une bague de montage (7).

9. Appareil selon l'une quelconque des revendications 1 à 8, caractérisé en ce qu'il est prévu, en plus d'un siège formé par la surface extérieure du tube de protection et de liaison (13) pour des buses interchangeables, à l'extrémité libre du tube de liaison et de protection (13), un élément de raccordement de buste (14) comportant une partie filetée sur lequel des buses interchangeables peuvent être vissées.

Fig.1

Fig.2

# Fig.3

EP 0 362 719 B1

Fig.4

EP 0 362 719 B1